(19) Europäisches Patentamt
European Patent Office
Office européen des brevets

(11) Veröffentlichungsnummer: **0 103 204**
**B1**

(12) # EUROPÄISCHE PATENTSCHRIFT

(45) Veröffentlichungstag der Patentschrift: **05.02.86**

(51) Int. Cl.⁴: **B 65 G 5/00, B 01 J 19/16**

(21) Anmeldenummer: **83108117.9**

(22) Anmeldetag: **17.08.83**

(54) **Mittel und Verfahren zum Abdecken des Sumpfes von Kavernen.**

(30) Priorität: **24.08.82 DE 3231349**

(43) Veröffentlichungstag der Anmeldung: **21.03.84 Patentblatt 84/12**

(45) Bekanntmachung des Hinweises auf die Patenterteilung: **05.02.86 Patentblatt 86/6**

(84) Benannte Vertragsstaaten: **DE FR GB NL**

(56) Entgegenhaltungen:
**FR - A - 2 119 805**
**FR - A - 2 243 893**
**FR - A - 2 322 804**
**FR - A - 2 483 897**
**US - A - 2 942 424**
**US - A - 3 738 807**

(73) Patentinhaber: **Ruhrgas Aktiengesellschaft, Huttropstrasse 60 Postfach 10 32 52, D-4300 Essen 1 (DE)**

(72) Erfinder: **Gloria, Karl, Dipl.-Ing., Hinderpad 15, D-4320 Hattingen (DE)**
Erfinder: **Costinescu-Tataranu, Alexander-Barbu, Dipl.-Ing., An der Braut 18, D-4300 Essen 16 (DE)**
Erfinder: **Schuster, Wilhelm, Ing.(grad.), Georg-Speyer-Strasse 64, D-6000 Frankfurt/Main (DE)**
Erfinder: **Wittekind, Jürgen, Ing.(grad.), Cranachstrasse 20, D-6000 Frankfurt/Main (DE)**

(74) Vertreter: **Zenz, Joachim Klaus, Dipl.-Ing. et al, ZENZ & HELBER Patentanwälte Am Ruhrstein 1, D-4300 Essen 1 (DE)**

EP 0 103 204 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Mittel und Verfahren zum Abdecken einer wasserhaltigen Flüssigkeit und zum Verhindern des Verdampfens dieser Flüssigkeit in eine gasförmige Umgebung, Insbesondere betrifft die Erfindung ein Verfahren zum Abdecken des Sumpfes von Kavernen, beispielsweise von in Salzstöcken ausgesolten Kavernen, die zur Speicherung von gasförmigen oder flüssigen, nicht wässrigen Medien dienen, unter Verwendung eines Rohöls, dessen Gehalt an Kohlenwasserstoffen mit höchstens 5 C-Atomen im Molekül 7 Gewichts-% nicht übersteigt und dessen spezifisches Gewicht höchstens 1,2 g/cm$^3$ bei einer Temperatur von +20 °C beträgt.

In der DE-OS 30 21 064, deren Inhalt hiermit audrücklich zum Bestandteil der Offenbarung der vorliegenden Erfindung gemacht wird, ist ein Verfahren zum Abdecken des Sumpfes von Kavernen mit dem eingangs genannten Rohöl beschrieben. Dieses Verfahren findet Anwendung auf Kavernen zur Speicherung von Gasen aller Art, insbesondere Brenngasen, wie Erdgas, ferner Methan, propan und Butan sowie deren Gemische, Mineralölprodukten, aber auch Luft, Die Speichermedien können gasförmig oder flüssig, aber auch zum Teil gasförmig und zum Teil flüssig vorliegen. Sei dem bekannten Verfahren wird das genannte Rohöl in einer Schichtdicke von mindestens 1 cm auf dem Sumpf aufgebracht,

Eine solche Sumpfabdeckung mit Rohöl hat den Zweck, daß der Übertritt von Wasser bzw, Wasserdampf aus dem Sumpf in das Speichermedium weitgehend unterbunden wird, Die Wasseraufnahme des Speichermediums läßt sich dadurch auf etwa ein tausendstel desjenigen Wertes vermindern, der sich bei unabgedecktem Sumpf ergibt.

Die genannte publikation enthält eine Berechnung der Taupunktänderung von Erdgas, die auf der Basis von Laborversuchen angestellt wurde, Ausgegangen wird von einer Kaverneüblicher Abmessungen, d. h. mit einem Hohlraumvolumen von etwa 250000 bis 350000 m$^3$ und einer Sole Oberfläche von etwa 900 bis 1100 m$^2$. Dabei wird angenommen, daß das Gas bei etwa 70 bar ein Jahr im Speichet verweilt, Daraus ergeben sich folgende Taupunktänderungen:

ohne Sumpfabdeckung von -8°C auf +38°C
mit 10 mm Sumpfabdeckung von -8°C auf -6°C
mit 250 mm Sumpfabdeckung von -8°C auf -7°C

Mit dieser Sumpfabdeckung kann der Betrieb von Trocknungsanlagen eingespart werden, die anderenfalls erforderlich sind, um den Taupunkt des ausgespeicherten, gegebenenfalls mit Wasserdampf gesättigten Gases soweit abzusenken, daß ein Rohrleitungstransport unter hohem Druck oder eine andere Verwendung möglich wird,

Da die Verweilzeiten in Kavernenspeichern aber auch wesentlich länger sein können, scheut man sich bisher, auf die kostspieligen Trocknungsanlagen völlig zu verzichten.

Es ist Aufgabe der vorliegenden Erfindung, die Wasserundurchlässigkeit der Abdeckung, insbesondere der Sumpfabdeckung von Kavernen zur Speicherung von Gasen, zu verbessern,

Zur Lösung dieser Aufgabe enthält das Mittel zum Abdecken einer wasserhaltigen Flüssigkeit, insbesondere des Sumpfes von Kavernen, eine Mischung aus

einem Rohöl, dessen Gehalt an Kohlenwasserstoffen mit höchstens 5 C-Atomen im Molekül 7 Gew.-% nicht übersteigt und dessen spezifisches Gewicht höchstens 1,2 g/cm$^3$ bei einer Temperatur von +20 °C beträgt, und wenigstens einer reaktionsfähigen Komponente, die sich mit den funktionellen Gruppen verbindet und diese Gruppen blockiett.

In det Literatur sind die erfindungsgemäß verwendeten schweren Öle beschrieben als eine komplexe Mischung aus Kohlenwasserstoffen verschiedenster Art, die in einem kolloidalen System vorliegen. Das physikalische und chemische Verhalten derartiget Öle wird weitgehend von deren Micell-Aufbau bestimmt:

An ein oder mehrere Moleküle sehr hohen Molekulargewichtes, die chemisch reaktionsträge sind, sind Moleküle mittleret Größe angelagert. In dieses räumliche Agglometat sind wiederum kleine Moleküle eingefügt, die vermutlich als Träger funktioneller Gruppen anzusehen sind.

Die Erfindung basiert auf der Erkenntnis, daß det Wassertransport durch das Rohöl über dessen funktionelle Gruppen, beispielsweise über die OH-Gruppen abläuft. Das Wasser wandert von funktioneller Gruppe zu funktioneller Gruppe bis zur Oberfläche der Sumpfabdeckung und gelangt von dort aus in das Speichetmedium. Dieser Wassertransport wird durch das erfindungsgemäße Blockieren der funktionellen Gruppen unterbunden.

Wenn nach dem erfindungsgemäßen Verfahren die genannte Mischung aus dem Rohöl und der mindestens einen reaktionsfähigen Komponente unter Bildung einer flüssigen oder fließfähigen Schicht in einer Dicke von mindestens 1 cm auf dem Sumpf einer Kaverne aufgebracht wird, so ergibt sich eine Sumpfabdeckung, die praktisch wasserundurchlässig ist. Daher wird nicht nur der Betrieb von Trocknungsanlagen, sondern bereits deren Installation überflüssig gemacht. Die wirtschaftliche Ersparnis ist erheblich.

Als reaktionsfähige Komponente kommt beispielsweise phosgen in Frage das mit Alkohol zu Chlorkohlensäureester und Salzsäure sowie mit Amin zu Chlorkohlensäureamid und Salzsäure reagiert. Ferner kann phosphoroxichlorid verwendet werden, das mit Alkohol zu phosphorsäureesterdichlorid und Salzsäure sowie mit Amin zu phosphorsäureamiddichlorid und Salzsäure reagiert. Aus Korrosionsgründen ungünstig ist dabei allerdings die Entstehung der Salzsäure. Als weitere reaktionsfähige Komponente sei Dimethylsulfat genannt, das mit Alkoholzu Methyläther und Methylsulfat sowie mit Amin zu Methylamin und Methylsulfat reagiert. Aus dem Methylsulfat kann Schwefelsäure entstehen, was ebenfalls die Gefahr von Korrosion mit sich bringt. Schließlich gilt für die genannten reaktionsfähigen Komponenten, daß die Reaktionsprodukte je nach

Umgebungsbedingungen in nicht vorhersehbarer Weise weiter reagieren können.

Vorzugsweise wird daher als reaktionsfähige Komponente ein Isocyanat dem Rohöl beigemischt, Es wurde gefunden, daß Isocyanate besonders gut dazu geeignet sind, die funktionellen Gruppen des Rohöls zu blockieren.

Die Reaktionen mit Isocyanaten beruhen auf der Reaktionsfähigkeit der Isocyanatgruppe -N=C=O mit Verbindungen, die aktive Wasserstoffatome enthalten, wie z. B. Alkohole, Wasser, Amine und Carbonsäuren. Die Reaktionen verlaufen dabei wie folgt:

1) Isocyanat + Alkohol → Urethan

$$R-N=C=O + R'-OH \longrightarrow R-NH-\underset{\parallel}{\overset{}{C}}-O-R' \quad (C=O)$$

2) Isocyanat + Wasser → Harnstoff

$$2R-N=C=O + H_2O \longrightarrow R-NH-\underset{\parallel}{C}-NH-R + CO_2 \quad (C=O)$$

3) Isocyanat + Amin → Harnstoff

$$R-N=C=O + R'NH_2 \longrightarrow R-NH-\underset{\parallel}{C}-NHR' \quad (C=O)$$

4) Isocyanat + Carbonsäure → Säureamid

$$R-N=C=O + R'COOH \longrightarrow R-NH-\underset{\parallel}{C}-R' + CO_2 \quad (C=O)$$

Di- und trimerisierte Isocyanate sowie Isocyanataddukte reagieren entweder analog mit ihren noch freien R-N=C=OGruppen oder unter öffnen ihrer Isomerbrücke. Letzteres könnte eine Erklärung sein für die überraschend hohe Reaktionsfähigkeit dieser Produkte unter den vorliegenden Bedingungen.

Von besonderer Bedeutung für die technische Anwendung der Isocyanate ist, daß diese zum Teil hochtoxischen Verbindungen nach vollständigem Ausreagieren untoxische Reaktionsprodukte ergeben.

Bei der Anwendung zur Soleabdeckung ist ein Überschuß an Isocyanat im öl unbedenklich, da sich das Isocyanat, selbst wenn ein Teil in das gespeicherte Gas übergehen sollte, mit der dort anfangsvorliegenden Feuchtigkeit gemäß Gleichung 2) zu einem untoxischen Reaktionsprodukt (Harnstoff) umsetzen wird. Diese Wasserreaktion wird außerdem bewirken, daß im Abdecköl noch vorhandenes Wasser bei Isocyanatüberschuß umgesetzt wird, so daß eine weitergehende Entwässerung des Öls erreicht wird. Die Menge an anfallendem Harnstoff ist selbst bei relativ großem Überschuß an Isocyanat noch so gering, daß es zu keiner bedenklichen Verunreinigung des Sumpfes kommt.

Verwendung finden können monofunktionelle Isocyanate, wie beispielsweise das aliphatiche Oktadecylisocyanat. Allerdings bringt diese Komponente nur eine geringe, ggf. unzureichende Viskositätserhöhung des Rohöls mit sich.

Wird hingegen erfindungsgemäß ein polyfunktionelles Isocyanat dem Rohöl beigemischt, so kommt es bei der Reaktion mit einem polyfunktionellen Partner, wie dem Rohöl zu einer Vernetzung und dementsprechend zu einer Erhöhung der Viskosität. Dadurch werden Strömungsvorgänge in der Abdeckschicht verringert oder völlig unterbunden. Dennoch bleibt die unbedingt erforderliche selbtheilende Eigenschaft der Sumpfabdeckung erhalten. Die Abdeckschicht, die Dank ihres spezifischen Gewichtes mit Sicherheit auf der Sumpfoberfläche schwimmt, wächst wieder zusammen, wenn sie von Gesteinsbrocken oder dergleichen durchschlagen wird. Auch läßt sie Sumpfflüssigkeit, die auf ihre Oberfläche gelangt ist, wieder nach unten sinken.

Vorzugsweise wird ein difunktionelles Isocyanat dem Rohöl beigemischt. Besonders gute Ergebnisse wurden mit Toluylendiisocyanat erzielt, wie es unter der Bezeichnung Desmodur T 65 von der Firma Bayer vertrieben wird. Es hat die Formel

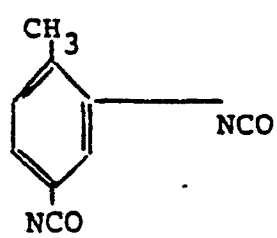

und liegt für die technische Anwendung als Gemisch der 2,4und der 2,6-Verbindung vor.

Neben seinem guten Reaktionsvermögen besitzt dieses Isocyanat den Vorteil, daß es flüssig ist und bei 25 °C

eine Viskosität von ca. 3 . 10 ³ pas hat.

Es ist daher gut pumpbar und läßt sich dem Rohöl ohne weiteres zumischen.

Toluylendiisocyanat ist zwar toxisch und hat bereits bei Raumtemperatur einen beträchtlichen Dampfdruck, entwickelt jedoch durch seinen stechenden Geruch eine solche Reizwirkung, daß das Versagen der erforderlichen Schutzmaßnahmen sofort bemerkt wird.

Seine Reaktionsprodukte nach vollständigem Ausreagieren sind untoxisch, sofern, wie im Falle des Rohöls, der Reaktionspartner selbst untoxisch ist.

Im Falle von Toluylendiisocyanat wurde gefunden, daß es besonders vorteilhaft ist, diese Komponente in einer Menge von max. 2 Gew.-% dem Rohöl beizumischen. Durch Versuche wurde festgestellt, daß sich 90 % dieser Menge mit den funktionellen Gruppen des Rohöls verbindet.

Zur Gruppe der in Frage kommenden difunktionellen Komponenten gehört ferner dimerisiertes Toluylendiisocyanat (Desmodur TT). Hier genügt schon ein sehr geringer Zusatz, um eine merkliche Viskositätszunahme zu erzielen. Allerdings ist diese Komponente pulverförmig und unlöslich, so daß die Zumischung Schwierigkeiten bereiten kann.

Verwiesen sei ferner auf ein Additionsprodukt aus Toluylendiisocyanat und Polypropylenglykol (Desmodur 1381). Allerdings lassen sich nur geringe Viskositätszunahmen erzielen, und es besteht die Gefahr, daß feste Reaktionsprodukte ausfallen.

Letzteres ist hingegen bei dem erfindungsgemäß ferner verwendbaren zykloaliphatischen Isocyanat Isophorondiisocyanat (IPDI) nicht der Fall. Diese Komponente zeigt ein ebenso vorteilhaftes Verhalten wie Desmodur T 65 und hat dabei einen geringeren Dampfdruck, so daß die Gefahr einer Verunreinigung der Atmosphäre geringer ist.

Eine anfängliche Beschleunigung der Viskositätszunahme und eine anschließende Verzögerung ergibt sich bei Verwendung von Isophorondiisocyanat zusammen mit einem Anteil von 0,3 % Dibutylzinndilaurat. Ebenfalls eine beschleunigte Viskositätszunahme erbringt das harnstoffhaltige Addukt auf Basis von Isophorondiisocyanat, nämlich das IPDI-Addukt H 2921.

Die Erfindung sieht ferner vor daß als reaktionsfähige Komponente ein trifunktionelles Isocyanat dem Rohöl beigemischt wird. Im wesentlichen ergeben sich dieselben Vorteile, wie bei Verwendung eines difunktionellen Isocyanates.

Zu den trifunktionellen Isocyanaten gehört das aromatische Isocyanat Desmodur L 67. Allerdings erzielt es eine relativ geringe Viskositätszunahme und bringt die Gefahr mit sich, daß festeReaktionsprodukte ausfallen.

Besonders vorteilhaft hingegen ist die Verwendung des trimerisierten Isophorondiisocyanates 'Polyisocyanat IPDI T 189/100'. Bereits ein geringer Zusatz ergibt eine beträchtliche Viskositätssteigerung. Zwar liegt die Komponente pulverförmig Vor, jedoch ist sie löslich, So daß keine schwierigkeiten beim Zumischen auftreten.

Als wesentliche Alternative sieht die Erfindung außerdem vor daß als reaktionsfähige Komponente eine Epoxidverbindung dem Rohöl beigemischt wird. Es wurde gefunden, daß auch Epoxidverbindungen besonders gut dazu geeignet sind, die funktionellen Gruppen des Rohöles zu blockieren und damit den Wasserdurchtritt durch die Sumpfabdeckung zu unterbinden.

Verbindungen mit Epoxidgruppen der allgemeinen Formel

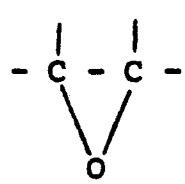

können mit einer Vielzahl von Verbindungen, die aktive Wasserstoffatome erhalten, reagieren. Die Reaktionen verlaufen beispielsweise wie folgt:

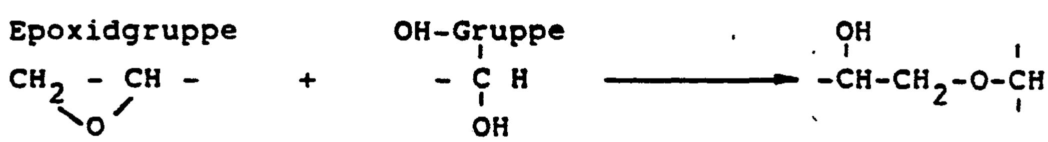


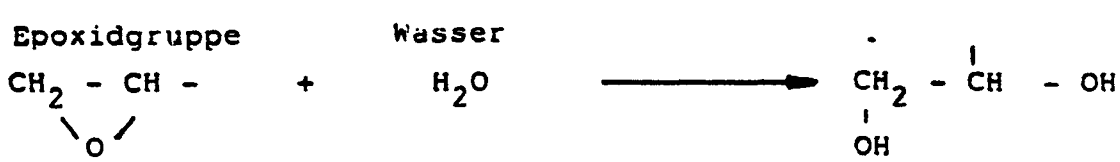

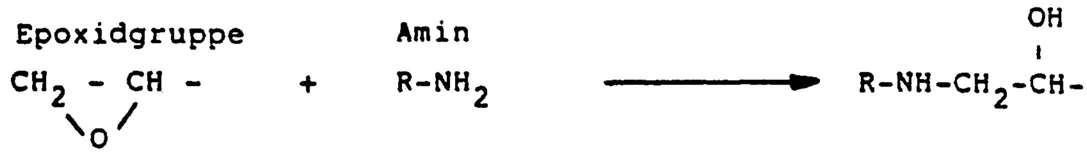


Die nach der primären Umsetzung vorliegenden OH- bzw. -NH-Wasserstoffatome reagieren Wiederum mit Epoxidgruppen unter Bildung größerer Moleküle.

Dabei wird erfindungsgemäß die cycloaliphatische Epoxidverbindung 3,4-Epoxycyclohexylmethyl-3,4-epoxycyclohexancarboxilat (Araldit CY 179) oder ein mittelviskoses Epoxidharz auf BasisBisphenol A-Epichlorhydrin (Eurepox 710) dem Rohöl beigemischt .

Vorzugsweise wird die reaktionsfähige Koponente dem Rohöl in einer Menge beigemischt, deren NCO-Gehalt dem einer 2 %igen Beimischung von Toluylendiisocyanat (Desmodur T 85) entspricht.

Vorteilhafterweise wird das Beimischen der reaktionsfähigen Komponente vor oder während der Einbringung des Rohöls in die Kaverne durchgeführt. Auf diese Weise kann eine gleichmäßige Durchmischung sichergestellt werden.

Zum Nachweis der Brauchbarkeit der Erfindung wurden Versuche mit folgenden geeigneten Rohölen durchgeführt:

| | Tia-Juana-Öl | Boscan-Öl |
|---|---|---|
| $H_2O$ (Karl Fischer): | 0,048 % | 0,108 % |
| primäre Amine: | 0,48 % | 0,40 % |
| Gesamtstickstoff: | 0,43 % | 0,61 % |
| aktiver Wasserstoff: | 0,040 % | 0,070 % |
| sekundäre Amine: | ca. 0,2 - 0,3 % | |

Die Analyse läßt eine differenzierte Zuordnung des aktiven Wasserstoffes zu OH-Gruppen und Amingruppen nicht zu, sie zeigt jedoch, daß die Voraussetzungen für Reaktionen mit Isocyanaten und Epoxidverbindungen in beiden Ölen gegeben sind.

Als reaktionsfähige Komponenten wurden folgende Stoffe getestet:

**Desmodur T 65**

(Toluylendiisocyanat)

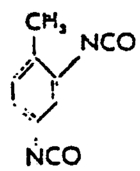

| | | |
|---|---|---|
| flüssig, Viskosität (25 °C) | : | 3 mPa s |
| NCO-Gehalt | : | 48,3 % |
| Flammpunkt | : | 127 °C |
| Siedepunkt | : | 246-247 °C |
| Dichte (20 °C) | : | 1,22 g/cm³ |
| Dampfdruck (20 °C) | : | $3 \cdot 10^{-2}$ mbar |
| MAK-Wert | : | 0,02 ppm |
| Toxisch | | |
| Hersteller | : | Bayer AG |
| Preis | : | 5,85 DM/kg* |

**Desmodur L 67**

(Trifunktionelles, aromatisches Isocyanat)

flüssig, 67%ige Lösung in Ethylglykolacetat/Xylol

| | | |
|---|---|---|
| Viskosität | : | ca. 2000 mPa s |
| NCO-Gehalt | : | 11,5 % |
| Flammpunkt | : | ca. 30 °C |
| Dichte (20 °C) | : | ca. 1,16 g/cm³ |
| Weitgehend untoxisch | | |
| Hersteller | : | Bayer AG |
| Preis | : | 5,65 DM/kg |

* Den Preisen liegt jeweils eine Abnahme von 1 t zugrunde.

**Oktadecylisocyanat**

($CH_3-(CH_2)_{16}-CH_2-NCO$)
(Monofunktionelles aliphatisches Isocyanat)

flüssig

| | | |
|---|---|---|
| NCO-Gehalt | : | 14,2 % |
| Flammpunkt | : | 137 °C |
| Siedepunkt | : | 170-180 °C |
| Dichte (25 °C) | : | 0,86 g/cm³ |
| Toxisch, stark haut- und schleimhautreizend | | |
| Hersteller | : | Hoechst AG |
| Preis | : | ca. 11,-- DM/kg |

**Isophorondiisocyanat** (IPDI)

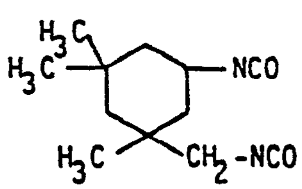

Difunktionelles. zykloaliphetisches Isocyanat

| | | |
|---|---|---|
| flüssig, Viskosität (20 °C) | : | 15 mPa s |
| NCO-Gehalt | : | 37,8 % |
| Flammpunkt | : | 142 °C |
| Siedepunkt (10 mbar) | : | 153 °C |
| Dichte (20 °C) | : | 1,06 g/cm³ |
| Dampfdruck (20 °C) | : | ca. 0,3 mbar |
| Infolge des niedrigen Dampfdrucks relativ untoxisch | | |
| Hersteller | : | Chem. Werke Hüls |
| Preis | : | 13,40 DM/kg |

**Desmodur TT**

Dimerisiertes Toluylendiisocyanat. difunktionell

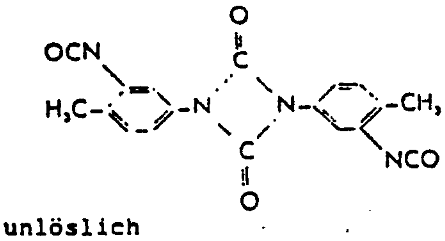

Fest, pulverförmig, unlöslich

| | | |
|---|---|---|
| NCO-Gehalt | : | 24,3 % |
| Schmelzpunkt | : | > 145 °C |
| Dichte (20 °C) | : | 1,48 $g/cm^3$ |
| Schüttgewicht | : | 0,4 $g/cm^3$ |

Relativ untoxisch, Staub darf nicht eingeatmet werden, schwach haut- und schleimhautreizend

| | | |
|---|---|---|
| Hersteller | : | Bayer AG |
| Preis | : | 19,65 DM/kg |

**Desmodur 1361**

Additionsprodukt aus Toluylendiisocyanat und Polypropylenglykol

flüssig, 61%ige Lösung in Ethylglykolacetat/Xylol

| | | |
|---|---|---|
| Viskosität (20 °C) | : | ca. 500 mPa s |
| NCO-Gehalt | : | ca. 6,5 % |
| Dichte (20 °C) | : | 1,07 $g/cm^3$ |
| Flammpunkt | : | ca. 32 °C |

Wenig toxisch

| | | |
|---|---|---|
| Hersteller | : | Bayer AG |
| Preis | : | 5,78 DM/kg |

**Araldit CY 179**

3,4-Epoxycyclohexylmethyl-3,4-epoxycyclohexancarboxilat; cycloaliphatische Epoxidverbindung

| | | |
|---|---|---|
| flüssig, Viskosität (25 °C) | : | 400 mPa s |
| Epoxidwert | : | 0,74 |
| Flammpunkt | : | > 100 °C |

Wenig toxisch

| | | |
|---|---|---|
| Hersteller | : | Ciba-Geigy GmbH |
| Preis | : | 19,75 DM/kg |

**IPDI - Addukt H 2921**

Harnstoffgruppenhaltiges Addukt auf Basis von Isophorondiisocyanat

| | | |
|---|---|---|
| flüssig, Viskosität (25 °C) | : | ca. 12 Pa s |
| NCO-Gehalt | : | 28 % |
| Flammpunkt | : | 157 °C |
| Dichte (20 °C) | : | 1,07 $g/cm^3$ |

Infolge des niedrigen Dampfdrucks relativ untoxisch

| | | |
|---|---|---|
| Hersteller | : | Chem. Werke Hüls |
| Preis | : | 12,45 DM/kg |

**Eurepox 710**

Mittelviskoses Epoxidharz auf Basis Bisphenol A - Epichlorhydrin

| | | |
|---|---|---|
| Epoxidwert | : | 0,51-0,56 |
| Flammpunkt | : | ca. 250 °C |
| Dichte (20 °C) | : | 1,167 g/cm³ |
| Wenig toxisch | | |
| Hersteller | : | Schering AG |
| Preis | : | 7,-- DM/kg |

**Polyisocyanat IPDI T 1890/100**

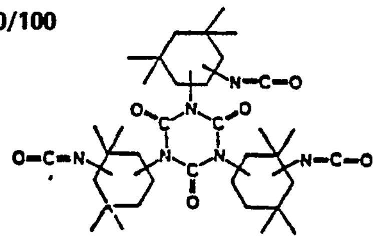

Trifunktionelles, trimerisiertes Isophorondiisocyanat fest, Lieferform granuliert
Löslich in Ketonen, Estern, Aromaten, chlorierten KW und Benzinkohlenwasserstoffen

T 1890 ist auch in gelöster Form im Handel.

| | | |
|---|---|---|
| NCO-Gehalt | : | 17 % |
| Dichte (20 °C) | : | 1,15 g/cm³ |
| Schüttdichte | : | 0,6 kg/l |
| Wenig toxisch, Haut und Atemwege sind jedoch vor dem Staub zu schützen. Hersteller | : | Chem. Werke Hüls |
| Preis | : | 17,20 DM/kg |

**Versuchsgruppe 1**

Als erstes Reaktionskriterium wurde die Viskositätszunahme von Tia-Juana-öl, hervorgerufen durch die oben beschriebenen reaktionsfähigen Komponenten, getestet.

Zur Untersuchung des Reaktionsverhaltens wurden zu jeweils 200 g auf 80 °C erwärmtem Tia-Juana-Öl die entsprechenden Zusatzstoffe unter intensivem Durchmischen zugefügt. Für die jeweils zugesetzte Menge wurde der NCO-Gehalt einer 2 %igen Zugabe von Toluylendiisocyanats zugrunde gelegt; bei Isocyanaten mit vom Toluylendiisocyanat abweichenden NCO-Gehalt erfolgte eine Umrechnung, um auf gleichen NCO-Anteil zu kommen.

Im Falle der Isocyanate kam es im Verlauf von ca. 60 min zu einer ausgeprägten Gasentwicklung.

In einem Contraves-Rheometer STV, Meßsystem B, wurde bei 80 °C das Viskositätsverhalten der Ansätze über die Zeit von 4 h untersucht. Anschließend wurde der Ansatz in einem verschlossenen Glasgefäß bei 80 °C gelagert. In vorgegebenen Zeitabständen wurde die Viskosität der Proben bei 80 °C ermittelt.

Die Viskositätsmessungen erfolgten bei Schergeschwindigkeiten von 9,24, 28,9 und 29,2 $s^{-1}$. Die Abweichungen der Meßwerte in Abhängigkeit von der Schergeschwindigkeit lassen erkennen, daß die modifizierten öle kein exakt Newtonsches Fließverhalten haben. Die Meßwerte sind in den Tabellen 1 und 2 aufgeführt.

Außerdem wurde die Viskositätsänderung als Faktor nach vier Wochen Versuchszeit angegeben:

| Substanz | Faktor der Viskositätsänderung |
|---|---|
| Desmodur T 65 (Isocyanat) | 4,34 |
| Desmodur L 67 (Isocyanat) | 1,26 |
| Oktadecylisocyanat | 1,45 |
| Isophorondiisocyanat (IPDI) | 2,10 |
| Desmodur TT 0,25 % Zusatz (dimerisiertes Toluylendiisocyanat) | 2,25 |
| Desmodur 1381 (Isocyanat) | ca. 1,20 |
| Isophorondiisocyanat + 0,3 % Dibutylzinndilaurat | ca. 2,0 |
| Araldit CY 179 (Epoxidverbindung) | 1,29 |
| IPDI-Addukt H 2921 (Isocyanat) | 2,0 |
| Eurepox 710 (Epoxidverbindung) | 1,82 |
| Polyisocyanat IPDI T 1890/100 | 5,40 |

Ein als Nullprobe gemessenes Tia-Juana-Öl ohne Zusatz veränderte während dieser Zeit seine Viskosität nur um den Faktor 1,11.

Nach einer Reaktionszeit von ca. 8 Wochen wurden die Versuchsansätze auf ihren Restgehalt an nicht umgesetzten Zusatzstoffen untersucht. Die Analyse ergab, daß Isocyanate nicht mehr oder nur noch in Spuren ( 0,03 %) vorlagen. Eurepox war ebenfalls nicht mehr nachweisbar, während vom Araldit 179 von 7,5 % Zusatz noch 5,15 % im Öl gefunden wurden.

Um eine Aussage über den Einfluß der Zusatzstoffe auf das Wasserdiffusionsverhalten zu erhalten, wurden mit zwei Stoffen Abdeckversuche in einem Autoklaven durchgeführt. Dazu wurden die zu untersuchenden Ölansätze 24 h bei 80 °C gelagert, bevor sie als Soleabdeckung in den Autoklaven eingebracht wurden. Bei diesen Versuchen wurde mit einer Schichtdicke von 10 mm gearbeitet, um die Meßzeit zu verkürzen. Der Gasdruck betrug 100 bar bei einer Temperatur von 50 °C.

Nach einer Meßzeit von ca. 200 h hatte sich ein Wasserdampfgleichgewicht im Meßgas (Taupunkt ca. 17 °C) eingestellt. Der Gasinhalt wurde dann entleert. Nach sorgfältigem Spülen der Apparatur mit trockenem Erdgas erfolgte bei gleicher Abdeckung eine erneute Gasbefüllung für eine zweite Messung.

Die Meßwerte sind in Tabelle 3 und im Diagramm von Fig. 1 aufgeführt.

Ferner wurde die Diffusionsrate ermittelt, u. Z. auch für das Tia-Juana-Öl ohne Zusätze. Die Ergebnisse gehen aus der Tabelle 4 hervor.

Die Meßwerte der zweiten Füllungen weisen eine höhere Diffusionsrate auf als die der ersten Füllungen. Dies ist zurückzuführen auf das leichte Aufschäumen der Abdeckschicht bei der Druckentspannung und die damit verbundene Durchmischung der Schicht, die sich bei der geringen Schichtdicke von 10 mm naturgemäß auf den Wassertransport auswirkt.

**Versuchsgruppe 2**

Die Durchführbarkeit der Erfindung wurde in einem Laborversuch nachgewiesen, der im folgenden beschrieben werden soll.

In ein Druckgefäß wurde Sole eingebracht und mit einer 25 cm dicken Sumpfabdeckung überlagert. Letztere bestand aus Boscanöl, das auf einen Wassergehalt von 0,05 % getrocknet worden war und eine Beimischung von 2 Gew.-% Toluylendiisocyanat enthielt. Sodann wurde das Druckgefäß mit Erdgas bei einem Druck 100 bar gefüllt. Das Erdgas war auf einen Taupunkt von -17 °C bei 100 bar getrocknet worden. Die Versuchstemperatur betrug 50 °C, und der Versuch lieft über 2.200 Stunden. Der Taupunkt der Gasfüllung wurde fortlaufend gemessen.

Die Änderung des Taupunktes über der Zeit ergibt sich aus der beiliegenden Tabelle 5. Außerdem sind die Werte der Tabelle in dem Diagranm nach Fig. 2 aufgetragen.

Demnach fiel der Taupunkt relativ rasch, nämlich nach ca. 200 Stunden, auf etwa -40 °C. Dies ist auf den Überschuß an Toluylendiisocyanat zurückzuführen, der eine Trocknung des Gases bewirkt hat. Dieser Trocknungsvorgang setzte sich dann noch weiter fort, allerdings wesentlich langsamer und in wesentlich geringerem Ausmaße.

Der Versuch zeigt, daß die erfindungsgemäße Sumpfabdeckung mit einer Schichtdicke von 25 cm für eine tatsächliche Langzeitspeicherung über viele Jahre geeignet ist. Sofern man in der Praxis davon ausgehen kann, daß das Erdgas immer kurzzeitig ein- und ausgespeichert wird, läßt sich unter entsprechender Einsparung von Kosten die Schichtdicke der Sumpfabdeckung wesentlich vermindern.

Das Verhalten der Viskosität der Sumpfabdeckung ergibt sich aus der beiliegenden Tabelle 6. Gemessen bei 80 °C, stieg die Viskosität relativ rasch, nämlich in 120 Stunden von 0,68 auf 4,0 Pas. Der weitere Anstieg war wesentlich langsamer und wesentlich geringer.

Die selbstheilende Eigenschaft der Sumfpabdeckung blieb erhalten. Dies wurde anhand einer Abdeckschicht ermittelt, die eine Dicke von 1,5 cm besaß und auf deren Oberfläche 1 ml Salzsole aufgegeben wurde. Bei 25 °C vergingen 150 Minuten und bei 50 °C 6 Minuten bis zum völligen Einsinken der Sole in die Schicht.

Schließlich wurde die Verminderung des Wassergehaltes in der Sumpfäbdeckung nachgewiesen. Wie erwähnt, enthielt das Boscanöl anfänglich 0,05 % Wasser. Nach Beendigung des Versuches befanden sich in der Oberfläche der Abdeckschicht 0,01 % und im Inneren 10 cm über der Sole 0,034 % Wasser.

Es ist daher zu sehen, daß die Erfindung eine flüssige oder zumindest fließfähige Komposition schafft, die nach Aufbringen auf den Sumpf eines Hohlraums bzw. allgemein auf die Oberfläche eines wasserhaltigen Mediums eine geschlossene und sich immer wieder selbst schließende Abdeckung schafft, welche praktisch wasserundurchlässig ist und ein Verdampfen des Wassers oder einer wässrigen Lösung in eine beispielsweise gasförmige Atmosphäre über lange Zeiträume hin zuverlässig verhindert. Die Erfindung ist überall dort anwendbar, wo ein wasserhaltiges flüssiges Medium von einer darüberliegenden, insbesondere nicht wässrigen Gas- oder Flüssigkeitssäule wasserundurchlässig zu trennen ist. Die reaktionsfähige Komponente, also beispielsweise das Isocyanat oder die Epoxidverbindung, kann in Mischung mit dem Rohöl auf die Sumpf- oder Wasseroberfläche aufgebracht werden; sie kann aber auch auf die bereits in situ befindliche Rohölschicht beispielsweise durch Aufsprühen oder Aufstäuben niedergeschlagen werden.

**Tabelle 1:** Viskositätsänderungen des Tia-Juana-Öls durch Zusatzstoffe in Abhängigkeit der Schergeschwindigkeit D
D = 9,24, 28,9, 90,2 $s^{-1}$

| Meß-zeit | Nullprobe Tia-Juana-Öl<br>Pa s | 8,4 % Desmodur L 67<br>Pa s | 2 % Desmodur T 65<br>Pa s | 6,8 % Oktadecyliso-cyanat<br>Pa s | 2,7 % Isophorodiiso-cyanat<br>Pa s | 2,7 % Isophorondiiso-cyanat + 0,3 % Dibutyl-zinndilaurat<br>Pa s |
|---|---|---|---|---|---|---|
| 0,5 h | 0,317/0,304/0,313 | 0,246/0.214/0,214 | 0,422/0,383/>0,360 | - /0,186/0,180 | 0,352/0,338/0,331 | 0,352/0,349/0,342 |
| 1 h | - - - | 0,246/0,225/0,221 | 0,458/0,439/ - | - /0,186/0,180 | 0,352/0,338/0,335 | 0,352/0,349/0,342 |
| 2 h | - - - | 0,246/0,225/0,221 | 0,492/0,473/ - | - /0,186/0,184 | 0,387/0,349/0,339 | 0,387/0,383/0,360 |
| 3 h | - - - | 0,246/0,225/0,223 | 0,528/0,495/ - | - /0,191/0,191 | - - - | 0,387/0,383/ - |
| 4 h | - - - | 0,246/0,231/0,232 | 0,528/0,518/ - | - /0,203/0,198 | - - - | - - - |
| 24 h | 0,317/0,315/0,317 | 0,282/0,248/0,252 | 0,686/0,664/ - | - /0,203/0,198 | - - - | 0,458/0,439/ - |
| 48 h | - - - | - - - | 0,722/0,709/ - | - - - | 0,458/0,439/>0,360 | 0,493/0,461/ - |
| 72 h | - - - | 0,264/0,242/0,245 | - - - | - - - | - - - | - - - |
| 1 Wo | 0,352/0,326/0,328 | 0,282/0,253/0,256 | 0,915/0,911/ - | 0,264/0,263/0,238 | - - - | 0,528/0,518/ - |
| 2 Wo | 0,352/0,326/0,331 | 0,282/0,270/0,266 | 1,373/>1,125/ - | 0,282/0,248/0,248 | 0,563/0,563/ - | 0,634/0,619/ - |
| 3 Wo | 0,352/0,326/0,335 | 0,317/0,270/0,302 | 1,654/ - - | 0,282/0,270/0,263 | 0,634/0,608/ - | 0,704/0,686/ - |
| 4 Wo | 0,352/0,338/0,346 | 0,317/0,270/0,306 | 1,830/ - - | 0,282/0,270/0,263 | 0,704/0,709/ - | - - - |
| 8 Wo | 0,352/0,338/0,338 | 0,387/0,349/0,353 | 2,605/ - - | 0,317/0,281/0,284 | 0,810/0,810/ - | 0,810/0,797/ - |
| 12 Wo | | | 3,168/ - - | 0,352/0,315/0,302 | - - - | - - - |
| 16 Wo | | | • 4,578/3,556/2,881 | - | 0,915/0,911/ - | 0,915/0,934/ - |

• Meßsystem C, D = 5,83, 18,23, 57,0 $s^{-1}$

Tabelle 2 : Viskositätsänderungen des Tia-Juana-Öls durch Zusatzstoffe in Abhängigkeit der Schergeschwindigkeit D
D = 9,24, 28,9, 90,2 $s^{-1}$

| Meß-zeit | 0,25 % Desmodur II Pa s | 15 % Desmodur 1361 Pa s | 7,5 % Araldit Cy 179 Pa s | 8 % Europox 710 Pa s | 3,25 IPDI-Addukt H 2921 Pa s | 6 % IPDI T 1890/100 Pa s |
|---|---|---|---|---|---|---|
| 0,5 h | 0,528/0,450/>0,360 | 0,211/0,169/0,169 | 0,264/0,236/0,234 | 0,282/0,259/ - | 0,458/0,439/>0,360 | 0,422/0,405/>0,360 |
| 1 h | 0,669/0,563/ - | 0,211/0,169/0,162 | 0,264/0,236/0,234 | 0,282/0,270/ - | 0,493/0,461/ - | 0,458/0,428/ - |
| 2 h | 0,739/0,630/ - | 0,211/0,180/0,173 | 0,264/0,236/0,241 | 0,282/0,270/0,280 | 0,528/0,495/ - | 0,458/0,461/ - |
| 3 h | 0,739/0,641/ - | - - - | 0,264/0,248/0,245 | 0,317/0,281/0,288 | - - - | 0,458/0,484/ - |
| 4 h | - - - | 0,211/0,180/0,180 | 0,282/0,248/0,248 | 0,317/0,293/0,295 | 0,563/0,529/ - | 0,528/0,506/ - |
| 24 h | 0,915/0,765/ - | 0,211/0,180/0,173 | 0,282/0,259/0,266 | 0,352/0,315/0,320 | 0,598/0,563/ - | 0,704/0,709/ - |
| 48 h | 1,091/0,866/ - | | 0,299/0,270/0,277 | 0,352/0,338/0,342 | 0,598/0,574/ - | 0,845/0,855/ - |
| 72 h | - - - | | 0,317/0,281/0,288 | 0,387/0,349/0,353 | - - - | 0,950/0,934/ - |
| 1 Wo | 1,056/0,844/ - | | 0,317/0,293/0,295 | 0,387/0,383/>0,360 | 0,669/0,664/ - | 1,197/>1,25/ - |
| 2 Wo | 1,302/0,990/ - | | 0,317/0,304/0,306 | 0,422/0,416/ - | 0,739/0,731/ - | 1,443/ - - |
| 3 Wo | - - - | | 0,317/0,304/0,310 | 0,458/0,450/ - | 0,810/0,810/ - | 1,619/ - - |
| 4 Wo | 1,338/1,012/ - | | 0,352/0,304/0,310 | 0,493/0,473/ - | 0,880/0,878/ - | 2,288/ - - |
| 8 Wo | - - - | | 0,352/0,315/0,317 | 0,528/0,506/ - | 0,950/0,956/ - | *4,905/4,500/ - |
| 12 Wo | 1,478/1,091/ - | | 0,352/0,338/0,338 | | 0,986/0,986/ - | |
| 16 Wo | | | | | | |

* Meßsystem C, D = 5,83, 18,23 $s^{-1}$

**Tabelle 3:** Taupunkte und Wassergehalte über abgedeckter Sole

| Meß-zeit | Tia-Juana-Öl | | 2,7 % Isophoron diisocyanat 1. Füllung | | 2,7 % Isophoron diisocyanat 2. Füllung | | 6 % IPDI T 1890/100 1. Füllung | | 6 % IPDI T 1890/100 2. Füllung | |
|---|---|---|---|---|---|---|---|---|---|---|
| | Taupunkt °C | g $H_2O/m^3$ | Taupunkt °C | g $H_2O/m^3$ | Taupunkt °C | g $H_2O/m^3$ | Taupunkt °C | g $H_2O/m^3$ | Taupunkt °C | g $H_2O/m^3$ |
| 0 | - 7,5 | 0,055 | - 10,8 | 0,044 | - 41,0 | <0,010 | - 41,0 | <0,010 | - 54,5 | <0,010 |
| 1 | - 10,5 | 0,045 | - 17,5 | 0,025 | - 47,9 | <0,010 | - 54,6 | <0,010 | - 54,5 | <0,010 |
| 2 | - 12,2 | 0,040 | - 19,6 | 0,022 | - 53,2 | <0,010 | - 54,6 | <0,010 | - 54,5 | <0,010 |
| 4 | - 13,0 | 0,035 | - 25,7 | 0,013 | - 52,0 | <0,010 | - 54,6 | <0,010 | - 54,5 | <0,010 |
| 8 | - 13,0 | 0,035 | - 30,0 | 0,010 | - 39,0 | <0,010 | - 54,6 | <0,010 | - 54,5 | <0,010 |
| 12 | - 12,3 | 0,040 | - 30,5 | 0,010 | - 25,5 | 0,013 | - 54,6 | <0,010 | - 54,5 | <0,010 |
| 18 | - 8,3 | 0,053 | - 30,5 | 0,010 | - 14,5 | 0,034 | - 54,5 | <0,010 | - 50,6 | <0,010 |
| 24 | - 5,6 | 0,063 | - 29,9 | 0,010 | - 10,5 | 0,045 | - 54,5 | <0,010 | - 35,0 | <0,010 |
| 48 | 3,6 | 0,120 | - 26,0 | 0,013 | 0,1 | 0,095 | - 54,5 | <0,010 | - 4,0 | 0,070 |
| 72 | 9,8 | 0,175 | - 13,7 | 0,035 | 7,1 | 0,140 | - 33,5 | <0,010 | 5,3 | 0,135 |
| 96 | 13,9 | 0,230 | - 2,5 | 0,080 | 14,0 | 0,230 | - 10,9 | 0,044 | 10,5 | 0,183 |
| 120 | 15,5 | 0,250 | 5,0 | 0,130 | 16,0 | 0,252 | - 1,0 | 0,090 | 14,0 | 0,235 |
| 144 | 16,1 | 0,255 | 11,3 | 0,190 | 16,9 | 0,270 | 5,1 | 0,130 | 15,0 | 0,240 |
| 168 | 16,3 | 0,260 | 14,4 | 0,230 | 17,2 | 0,270 | 9,0 | 0,170 | 16,3 | 0,260 |
| 192 | 16,2 | 0,255 | 15,0 | 0,240 | 17,3 | 0,270 | 13,0 | 0,210 | 16,5 | 0,260 |
| 216 | 16,1 | 0,253 | 15,8 | 0,250 | 17,8 | 0,280 | 16,0 | 0,252 | | |
| 240 | 16,0 | 0,252 | 16,8 | 0,270 | 17,5 | 0,280 | 16,6 | 0,270 | | |
| 264 | 16,1 | 0,253 | 16,7 | 0,270 | 17,5 | 0,280 | 17,0 | 0,270 | | |
| 288 | 16,4 | 0,260 | 16,7 | 0,270 | 17,5 | 0,280 | 17,0 | 0,270 | | |
| 312 | 16,5 | 0,260 | 16,7 | 0,270 | 17,4 | 0,270 | 16,9 | 0,270 | | |
| 336 | 16,5 | 0,260 | 17,4 | 0,280 | 17,4 | 0,270 | 16,8 | 0,270 | | |
| 360 | 16,5 | 0,260 | 18,0 | 0,300 | 17,4 | 0,270 | 16,8 | 0,270 | | |
| 384 | 16,4 | 0,260 | 17,6 | 0,280 | | | 16,5 | 0,260 | | |
| 408 | 16,5 | 0,260 | 17,8 | 0,280 | | | 16,5 | 0,260 | | |
| 432 | 16,0 | 0,252 | 17,8 | 0,280 | | | 16,5 | 0,260 | | |

**Tabelle 4:** Diffusionsraten von reinem Tia-Juana-Öl und Öl mit Zusätzen

| | | Meßzeit h | Taupunkt °C | Wassergehalt g/m³ | Diffusionsrate* g/m²h |
|---|---|---|---|---|---|
| Tia-Juana-Öl ohne Zusatz | | 72 | 9,8 | 0,175 | 0,0751 |
| | | 144 | 16,1 | 0,255 | 0,0547 |
| Tia-Juana-Öl + 2,7 % Isophorondiisocyanat | 1. Füllung | 72 | -13,7 | 0,035 | 0,0150 |
| | | 144 | 11,3 | 0,120 | 0,0408 |
| | 2. Füllung | 72 | 7,1 | 0,140 | 0,0601 |
| | | 144 | 16,9 | 0,270 | 0,0579 |
| Tia-Juana-Öl + 6 % Polyisocyanat T 1890/100 | 1. Füllung | 72 | -33,5 | 0,007 | 0,0030 |
| | | 144 | 5,1 | 0,130 | 0,0279 |
| | 2. Füllung | 72 | 5,3 | 0,135 | 0,0579 |
| | | 144 | 15,0 | 0,240 | 0,0515 |

* Berechnet aus Soleoberfläche 0,0133 m², Gasinhalt 0,411 m³ (im Normzustand)

**Tabelle 5:** Taupunkte im Gas über der abgedeckten Sole (°C)
Versuchsbedingungen: 250 mm Abdeckschicht, 100 bar, 50 °C

| Versuchszeit h | Taupunkt °C |
|---|---|
| 0 | - 17,2 |
| 0,5 | - 19,6 |
| 1 | - 20,7 |
| 2 | - 21,5 |
| 4 | - 24,5 |
| 8 | - 27,7 |
| 12 | - 28,6 |
| 18 | - 30,0 |
| 24 | - 30,8 |
| 48 | - 34,6 |
| 72 | - 35,8 |
| 96 | - 37,0 |
| 120 | - 34,3 |
| 144 | - 37,0 |
| 168 | - 37,3 |
| 192 | - 37,1 |
| 216 | - 39,0 |
| 240 | - 40,8 |
| 264 | - 40,0 |
| 312 | - 41,0 |
| 720 | - 42,0 |
| 1500 | - 45,0 |
| 2200 | - 50,8 |

**Tabelle 6:** Viskositätszunahme von Boscanöl mit Zusatz von 2 Gew.-% Toluylendiisocyanat in Abhängigkeit von der Reaktionszeit (Gemessen bei 80 °C)

| Reaktionszeit h | Viskosität Pa·s |
|---|---|
| 0 | 0,68 |
| 1 | 0,73 |
| 2 | 1,15 |
| 4 | 1,52 |
| 8 | 2,04 |
| 120 | 4,0 |
| 2200 | 4,56* |

Gemessen an Abdeckflüssigkeit nach Ende des Versuchs

**Patentansprüche**

1. Mittel zum Abdecken einer wasserhaltigen Flüssigkeit und zum Verhindern des Verdampfens dieser Flüssigkeit in eine gasförmige Umgebung, enthaltend ein Rohöl dessen Gehalt an Kohlenwasserstoffen mit höchstens 5 C-Atomen im Molekül 7 Gew.-% nicht übersteigt und dessen spezifisches Gewicht höchstens 1,2 g/cm$^3$ bei einer Temperatur von +20 °C beträgt, gekennzeich- net durch eine Nischung aus dem Rohöl und wenigstens einer reaktionsfähigen Komponente, die sich mit den funktionellen Gruppen des Rohöls verbindet und diese Gruppen blockiert.

2. Mittel nach Anspruch 1, dadurch gekennzeichnet, daß die reaktionsfähige Komponente in der Mischung ein Isocyanat ist.

3. Mittel nach Anspruch 2, dadurch gekennzeichnet, daß ein polyfunktionelles Isocyanat dem Rohöl beigemischt ist.

4. Mittel nach Anspruch 3, dadurch gekennzeichnet, daß Toluylendiisocyanat (Desmodur T 65) dem Rohöl beigemischt ist.

5. Mittel nach Anspruch 3, dadurch gekennzeichnet, daß die reaktionsfähige Komponente zykloaliphatisches Isocyanat (Isophorondiisocyanat IPDI) enthält.

6. Mittel nach Anspruch 3, dadurch gekennzeichnet, daß die reaktionsfähige Komponente ein trimerisiertes Isophorondiisocyanat (Polyisocyanat IPDI T 1890/100) enthält.

7. Mittel nach Anspruch 1, dadurch gekennzeichnet, daß die reaktionsfähige Komponente in der Mischung eine Epoxidverbindung enthält.

8. Mittel nach Anspruch 7, dadurch gekennzeichnet, daß die reaktionsfähige Komponente die zykloaliphatische Epoxidverbindung 3,4-Epoxycyclohexylmethyl-3,4-epoxycyclohexancarboxilat (Araldit CY 179) enthält.

9. Mittel nach Anspruch 7, dadurch gekennzeichnet, daß die reaktionsfähige Komponete ein mittelviskoses Epoxidharz auf Basis Bisphenol A-Epichlorhydrin (Eurepox 710) enthält.

10. Mittel nach einem der Ansprüche 1 bis 9, dadurch gekennzeichnet, daß die reaktionsfähige Komponente dem Rohöl in einer Menge begemischt ist, deren NCO-Gehalt dem einer Beimischung von 2 Gew.-% von Toluylendiisocyanat (Desmodur T 65) entspricht.

11. Verfahren zum Abdecken des Sumpfes von Kavernen,beispielsweise von in Salzstöcken ausgesolten Kavernen, die zur Speicherung von gasförmigen oder flüssigen, nicht wässrigen Medien dienen, dadurch gekennzeichnet, daß das Mittel nach einem der Ansprüche 1 bis 10, bestehend aus einer Mischung aus dem Rohöl und wenigstens einer reaktionsfähigen Komponente, unter Bildung einer flüssigen oder fließfähigen Schicht in einer Dicke von mindestens 1 cm auf dem Sumpf aufgebracht wird.

12. Verfahren nach Anspruch 11, dadurch gekennzeichnet, daß die wenigstens eine reaktionsfähige Komponente dem Rohöl vor dessen oder während dessen Einführen beigemischt wird.

13. Verfahren nach Anspruch 11, dadurch gekennzeichnet, daß die reaktionsfähige Komponente in gleichmäßiger Verteilung auf eine auf dem Sumpf befindliche Rohölschicht niedergeschlagen, vorzugsweise aufgestäubt oder aufgesprüht wird.

14. Verwendung des Mittels nach einem der Ansprüche 1 bis 10 zum Verhindern des Verdampfens von Wasser oder einer wässrigen Lösung in eine gasförmige Atmsophäre, wobei die Mischung aus dem Rohöl und der

mindestens einen reaktionsfähigen Komponente auf der Oberfläche des Wassers oder der wässrigen Lösung gleichmäßig verteilt wird.

**Revendications**

1. Composition destinee à former la couverture d'un liquide aqueux et pour éviter l'évaporation dudit liquide dans un environnement gazeux contenant du petrole brut, dont la teneur en hydrocarbures avec un maximum de 5 atomes de carbone par molecule ne depasse pas 7 % en poids et dont la masse volumique est de 1,2 $g/cm^3$ au maximum à une temperature de + 20° C,
caractérisée par
un mélange de pétrole brut et d'au moins un composant réactif, se liant avec les constituants réactifs du pétrole brut et bloquant les réactions ultérieures des constituants.

2. Composition selon la revendication 1,
caractérisée par le fait
que le composant réactif du mélange est un isocyanate.

3. Composition selon la revendication 2,
caractérisée par le fait
que ledit isocyanate est un isocyanate polyfonctionnel.

4. Composition selon la revendication 3,
caractérisée par le fait
que ledit isocyanate polyfonctionnel contient du toluylène-diisocyanate (Desmodur T 65).

5. Composition selon la revendication 3,
caractérisée par le fait
que ledit isocyanate polyfonctionnel contient de l'isocyanate cycloaliphatique (isophorone-diisocyanate IPDI)

6. Composition selon la revendication 3,
caractérisée par le fait
que ledit isocyanate polyfonctionnel contient
de l'isophorone-diisocyanate trimere (polyisocyanate IPDI T 1890/100)

7. Composition selon la revendication 1,
caractérisée par le fait
que ledit composant réactif contient un composé époxydique.

8. Composition selon la revendication 7,
caractérisée par le fait
que ledit composant réactif contient le composé époxydique cycloaliphatique 3,4-époxycyclohexylméthyle-3,4-époxycyclohexancarboxilate
(Araldit CY 179)

9. Composition selon la revendication 7,
caractérisée par le fait
que ledit composant réactif contient une résine d'époxy d'une viscosité moyenne sur la base de bisphénole A-épichlorhydrine (Eurepox 710)

10. Composition selon une des revendications 1 à 9,
caractérisée par le fait
que le composant réactif est mélangé avec le pétrole brut à un taux que la teneur en NCO dudit composant correspond à un ajoutage de 2 % en poids de toluylènediisocyanate (Desmodur T 65) audit pétrole brut.

11. procédé destiné è la couverture des puisards dans des cavernes comme celles exploitées dans des dômes de sel, servant au stockage de fluides gazeux ou liquides non aqueux,
caractérisé par le fait
que la composition selon une des revendications 1 à 10, constituée d'un mélange de pétrole brut et d'au moins un composant réactif est répandue sur le puisard à une épaisseur d'au moins 1 cm en formant une couche liquide ou quasi-liquide.

12. Procédé selon la revendication 11,
caractérisé par le fait
que ledit composant réactif est ajouté audit pétrole brut avant ou pendant l'injection.

13. Procédé selon la revendication 11,
caractérisé par le fait
que ledit composant réactif est assez uniformément distribué, de préference atomisé sur une couche de petrole brut située au dessus du puisard.

14. Exploitation de la composition selon une des revendications 1 à 10 pour éviter l'évaporation d'eau ou d'une solution aqueuse dans un environnement gazeux en distribuant le melange de pétrole brut et d'au moins un composant réactif d'une manière relativement uniforme sur la surface de l'eau ou de la solution aqueuse.

**Claims**

1. A composition for blanketing any hydrous liquid and for preventing the evaporation of said liquid into a gaseous environment containing a crude oil containing not more than 7 % (by weight) of hydrocarbons with five or less carbon atoms in each molecule and having a density not exceeding 1.2 g/cma at a temperature of +20° C, characterized in that said composition is a mixture of the said crude oil and not less than one reactive component combining with the functional groups of said crude oil and blocking said groups.

2. A composition according to claim 1 characterized in that the reactive component in said mixture is an isocyanate.

3. A composition according to claim 2 characterized in that said mixture contains a polyfunctional isocyanate.

4. A composition according to claim 3 characterized in that said mixture contains tolylene diisocyanate.

5. A composition according to claim 3 characterized in that said reactive component contains cycloaliphatic isocyanate (isophorone diisocyanate (IPDI)):

6. A composition according to claim 3 characterized in that said reactive component contains a trimerized isophorone diisocyanate (polyisocyanate (IPDI T 1890/100)).

7. A composition according to claim 1 characterized in that said reactive component in said mixture contains an epoxy compound.

8. A composition according to claim 7 characterized in that said reactive component contains cycloaliphatic 3,4-epoxy-cyclohexyl methyl-3,4-epoxycyclohexancarboxilate (Araldit CY 179).

9. A composition according to claim 7 characterized in that said reactive component contains a moderately viscous epoxy resin obtained from bisphenol-A epichlorhydrin (Eurepox 710).

10. A composition according to any of the claims 1 through 9 characterized in that the share of said reactive component in said mixture is such that the NCO content of said mixture is equivalent to a share of 2 % (by weight) of tolylene diisocyanate (Desmodur T 65) in said mixture.

11. A process for blanketing the sump of any storage cavity, such as a cavity developed by solution mining techniques in salt deposits for the storage of gaseous or liquid, nonhydrous substances, characterized in that the composition according to any of claims 1 through 10 consisting of a mixture of crude oil and not less than one reactive component forms a fluid layer on said sump, said fluid layer having a thickness of not less than 1 cm.

12. A process according to claim 11 characterized in that not less than one such reactive component is mixed with said crude oil prior to or during the introduction of said crude oil into said cavity.

13. A process according to claim 11 characterized in that said reactive component is distributed relatively evenly, preferably by spraying techniques, over a layer of crude oil lying on said sump.

14. The exploitation of the composition according to any of claims 1 through 10 to prevent the evaporation of water or of a hydrous solution into a gaseous environment, characterized in that the mixture of crude oil and not less than one reactive component is distributed evenly upon the surface of said water or said hydrous solution.

1 / 2

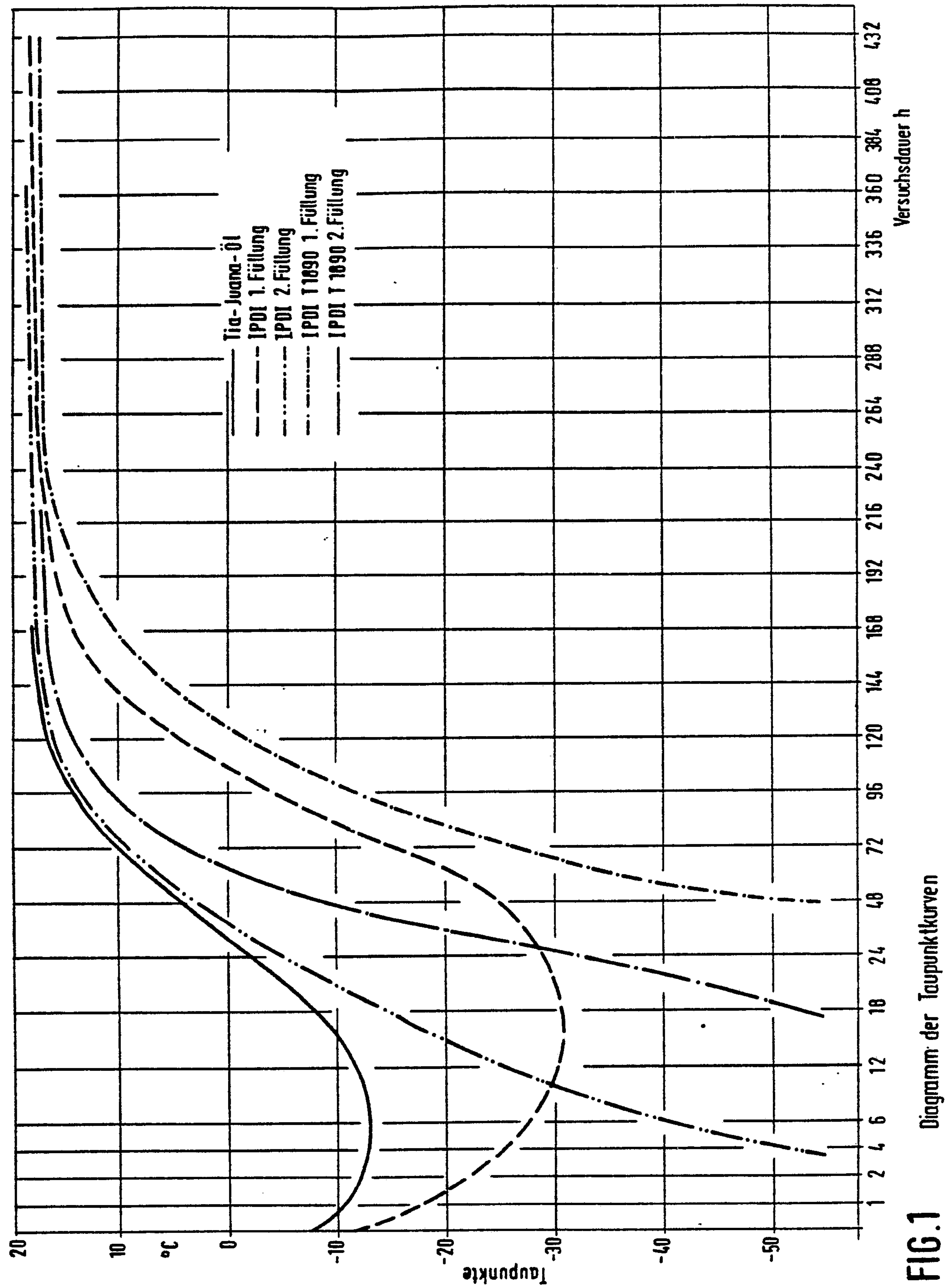
Tia-Juana-Öl
IPDI 1. Füllung
IPDI 2. Füllung
IPDI T1890 1. Füllung
IPDI T 1890 2. Füllung
Versuchsdauer h
432
408
384
360
336
312
288
264
240
216
192
168
144
120
96
72
48
24
18
12
6
4
2
1
Diagramm der Taupunktkurven
20
10
°C
0
-10
-20
-30
-40
-50
Taupunkte

FIG.1

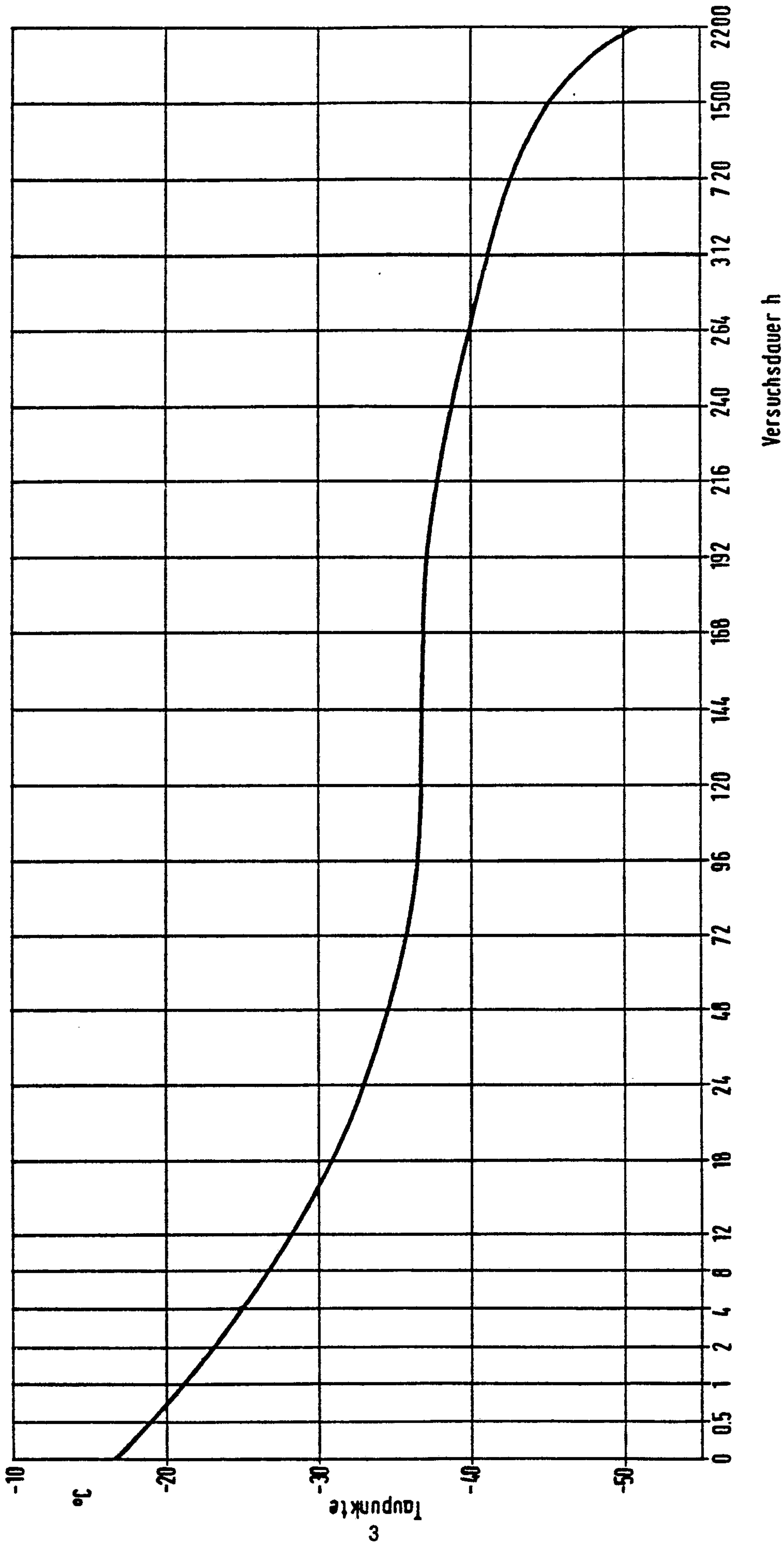
-10
-20
-30
-40
-50
°C
Taupunkte
0
0.5
1
2
4
8
12
18
24
48
72
96
120
144
168
192
216
240
264
312
720
1500
2200
Versuchsdauer h

FIG. 2